# EUROPEAN PATENT APPLICATION

(11) **EP 2 961 159 A1**
(43) Date of publication of application: **30.12.2015**
(21) Application number: 14812389.6
(22) Date of filing: 18.07.2014
(51) Int. Cl.: H04N 7/15

(54) **VIDEO INFORMATION PRESENTATION METHOD, APPARATUS AND SYSTEM**

(30) Priority: 17.04.2014 CN 201410156036
(71) Applicant: Huawei Technologies Co., Ltd., Longgang District Shenzhen, Guangdong 518129 (CN)
(72) Inventor: GE, Peng, Shenzhen Guangdong 518129 (CN); DONG, Jianming, Shenzhen Guangdong 518129 (CN)
(74) Representative: Körber, Martin Hans
(86) International application number: PCT/CN2014/082565
(87) International publication number: WO 2015/158054

(57) **Abstract**

Embodiments of the present invention provide a videoconferencing information presentation method, apparatus, and system. The embodiments of the present invention relate to the field of communications technologies, and are used to resolve a problem of presenting videoconferencing information at a network video conference. The method includes: receiving information, sent by a first video endpoint, about a first position of an obstruction at a first moment in a sensing area of the first video endpoint; acquiring information about a first preset range to which the first position belongs; determining whether the first preset range is the same as a second preset range to which a second position of the obstruction at a second moment belongs, where the second moment is a moment previous to the first moment; if the first preset range is different from the second preset range, acquiring a first videoconferencing information presenting manner that matches the first preset range; and presenting videoconferencing information, where a presenting manner matches a preset range to which the obstruction belongs. The videoconferencing information presentation method, apparatus, and system provided in the embodiments of the present invention can be applied to a video conferencing device that has a relatively high requirement for a video effect.

## Description

This application claims priority to Chinese Patent No. 201410156036.9, filed with the Chinese Patent Office on April 17, 2014 and entitled "VIDEOCONFERENCING INFORMATION PRESENTATION METHOD, APPARATUS, AND SYSTEM", which is incorporated herein by reference in its entirety.

### TECHNICAL FIELD

Embodiments of the present invention relate to the field of communications technologies, and in particular, to a videoconferencing information presentation method, apparatus, and system.

### BACKGROUND

With development of communications technologies, a multipoint video conference is widely applied. In multipoint video communication, videoconferencing information that includes images of participants and sub stream information used as a shared material of a video conference needs to be presented to the participants at each video endpoint.

In the prior art, a multipoint video bridge is generally used. First, video signals coming from each video endpoint are combined to generate a single video output signal. Then, the video output signal is shared by each video endpoint, thereby presenting videoconferencing information of the video output signal to participants at each video endpoint. In an ideal case, the participants at each video endpoint may see videoconferencing information that includes images of participants at other video endpoints and sub stream information used as a shared material of a video conference.

However, in a process of a multipoint video conference, participants at each video endpoint are generally involved. For example, a speaker at a video endpoint needs to deliver a presentation by referring to videoconferencing information. A different speaker generally has a different standing posture habit in a presentation process, and a standing position of the speaker relative to a display screen is different. Therefore, for participants at other video endpoints, a problem that the speaker blocks the videoconferencing information exists, thereby causing that a video conference effect is poor and communication efficiency among the participants is low.

### SUMMARY

Embodiments of the present invention provide a videoconferencing information presentation method, apparatus, and system, which are used to improve communication efficiency among participants at a video conference.

To achieve the foregoing objective, the following technical solutions are used in the embodiments of the present invention:

According to a first aspect, an embodiment of the present invention provides a videoconferencing information presentation method, including:
receiving information, sent by a first video endpoint, about a first position of an obstruction at a first moment, where the first video endpoint is any video endpoint at a multipoint video conference, and the first position is a position in which the obstruction in a sensing area of the first video endpoint is located at the first moment;
acquiring information about a first preset range, where the first preset range is a preset range to which the first position belongs, and the preset range is an area module formed by dividing the sensing area of the first video endpoint in advance;
determining whether the first preset range is the same as a second preset range, where the second preset range is a preset range to which a second position of the obstruction at a second moment belongs, and the second moment is a moment previous to the first moment;
if the first preset range is different from the second preset range, acquiring a first videoconferencing information presenting manner that matches the first preset range; and
sending videoconferencing information and a presenting manner of the videoconferencing information to the first video endpoint, where the presenting manner of the videoconferencing information is the first videoconferencing information presenting manner; and
if the first preset range is the same as the second preset range, sending the videoconferencing information and the presenting manner of the videoconferencing information to the first video endpoint, where the presenting manner of the videoconferencing information is a second videoconferencing information presenting manner, and the second videoconferencing information presenting manner is a videoconferencing information presenting manner that matches the second preset range.

In a first possible implementation manner of the first aspect, before the receiving information, sent by a first video endpoint, about a first position of an obstruction at a first moment, the method further includes:
dividing the sensing area of the first video endpoint into multiple area modules, where each area module corresponds to a preset range; and
generating by means of calculation, for each preset range, a videoconferencing information presenting manner that matches each preset range.

With reference to the first aspect or the first possible implementation manner of the first aspect, in a second possible implementation manner, the videoconferencing information presenting manner includes:
a size, a position, and transparency of a videoconferencing information display interface.

According to a second aspect, an embodiment of the present invention provides a videoconferencing information presentation method, including:
sending, by a first video endpoint to a video server, information about a first position of the first video endpoint at a first moment, where the first video endpoint is any video endpoint at a multipoint video conference, and the first position is a position in which an obstruction in a sensing area of the first video endpoint is located at the first moment;
receiving, by the first video endpoint, videoconferencing information and a presenting manner of the videoconferencing information that are sent by the video server, where the presenting manner of the videoconferencing information is a first videoconferencing information presenting manner or a second videoconferencing information presenting manner, and the presenting manner of the videoconferencing information is determined by the video server according to the first position of the first video endpoint at the first moment; and
presenting, by the first video endpoint, the received videoconferencing information in the first videoconferencing information presenting manner or in the second videoconferencing information presenting manner.

In a first possible implementation manner of the second aspect, the presenting manner of the videoconferencing information includes:
a size, a position, and transparency of a videoconferencing information display interface.

According to a third aspect, an embodiment of the present invention provides a videoconferencing information presentation apparatus on a server side, and the apparatus includes:
a receiving module, configured to receive information, sent by a first video endpoint, about a first position of an obstruction at a first moment, where the first video endpoint is any video endpoint at a multipoint video conference, and the first position is a position in which the obstruction in a sensing area of the first video endpoint is located at the first moment;
an acquiring module, configured to acquire information about a first preset range, where the first preset range is a preset range to which the first position belongs, and the preset range is an area module formed by dividing the sensing area of the first video endpoint in advance;
a determining module, configured to determine whether the first preset range is the same as a second preset range, where the second preset range is a preset range to which a second position of the obstruction at a second moment belongs, and the second moment is a moment previous to the first moment, where
the acquiring module is further configured to acquire a first videoconferencing information presenting manner that matches the first preset range; and
a sending module, configured to send videoconferencing information and a presenting manner of the videoconferencing information to the first video endpoint, where the presenting manner of the videoconferencing information is the first videoconferencing information presenting manner, where
the sending module is further configured to send the videoconferencing information and the presenting manner of the videoconferencing information to the first video endpoint, where the presenting manner of the videoconferencing information is a second videoconferencing information presenting manner, and the second videoconferencing information presenting manner is a videoconferencing information presenting manner that matches the second preset range.

In a first possible implementation manner of the third aspect, the apparatus further includes:
a dividing module, configured to divide the sensing area of the first video endpoint into multiple area modules, where each area module corresponds to a preset range; and
a calculating module, configured to generate by means of calculation, for each preset range, a videoconferencing information presenting manner that matches each preset range.

With reference to the third aspect or the first possible implementation manner of the third aspect, in a second possible implementation manner, the videoconferencing information presenting manner includes:
a size, a position, and transparency of a videoconferencing information display interface.

According to a fourth aspect, an embodiment of the present invention provides a videoconferencing information presentation apparatus on an endpoint side, and the apparatus includes:
a sending module, configured to send information about a first position of a first video endpoint at a first moment to a video server, where the first video endpoint is any video endpoint at a multipoint video conference, and the first position is a position in which an obstruction in a sensing area of the first video endpoint is located at the first moment;
a receiving module, configured to receive videoconferencing information and a presenting manner of the videoconferencing information that are sent by the video server, where the presenting manner of the videoconferencing information is a first videoconferencing information presenting manner or a second videoconferencing information presenting manner, and the presenting manner of the videoconferencing information is determined by the video server according to the first position of the first video endpoint at the first moment; and
a presenting module, configured to present the received videoconferencing information in the first videoconferencing information presenting manner or in the second videoconferencing information presenting manner.

In a first possible implementation manner of the fourth aspect, the presenting manner of the videoconferencing information includes:
a size, a position, and transparency of a videoconferencing information display interface.

According to a fifth aspect, an embodiment of the present invention provides a videoconferencing information presentation system, and the system includes:
a video server and a video endpoint, where
the video server uses a videoconferencing information presentation apparatus on a server side provided by any embodiment of the present invention, and the video endpoint uses a videoconferencing information presentation apparatus on an endpoint side provided by any embodiment of the present invention.

According to technical solutions provided in embodiments of the present invention, a first video endpoint first sends, to a video server, information about a first position of an obstruction at a first moment in a sensing area of the first video endpoint. After receiving the information about the first position that is sent by the first video endpoint, the video server acquires information about a first preset range to which the first position belongs; determines whether the first preset range is the same as a second preset range to which a second position of the obstruction at a second moment belongs, where the second moment is a moment previous to the first moment; and finally acquires a presenting manner of videoconferencing information and sends the videoconferencing information and the presenting manner of the videoconferencing information to the first video endpoint. After receiving the videoconferencing information and the presenting manner of the videoconferencing information that are sent by the video server, the first video endpoint presents the received videoconferencing information in the received presenting manner of the videoconferencing information, thereby avoiding that the obstruction blocks the videoconferencing information, and improving communication efficiency among participants at a video conference.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of Embodiment 1 of a videoconferencing information presentation method according to the present invention;
FIG. 2 is a flowchart of Embodiment 2 of a videoconferencing information presentation method according to the present invention;
FIG. 3 is a schematic diagram of Embodiment 3 of a videoconferencing information presentation method according to the present invention;
FIG. 4 is a flowchart of Embodiment 4 of a videoconferencing information presentation method according to the present invention;
FIG. 5 is a schematic diagram of Embodiment 5 of a videoconferencing information presentation method according to the present invention;
FIG. 6 is a flowchart of Embodiment 6 of a videoconferencing information presentation method according to the present invention;
FIG. 7 is a schematic structural diagram of Embodiment 1 of a videoconferencing information presentation apparatus according to the present invention;
FIG. 8 is a schematic structural diagram of Embodiment 2 of a videoconferencing information presentation apparatus according to the present invention;
FIG. 9 is a schematic structural diagram of Embodiment 3 of a videoconferencing information presentation apparatus according to the present invention; and
FIG. 10 is a schematic structural diagram of a videoconferencing information presentation system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

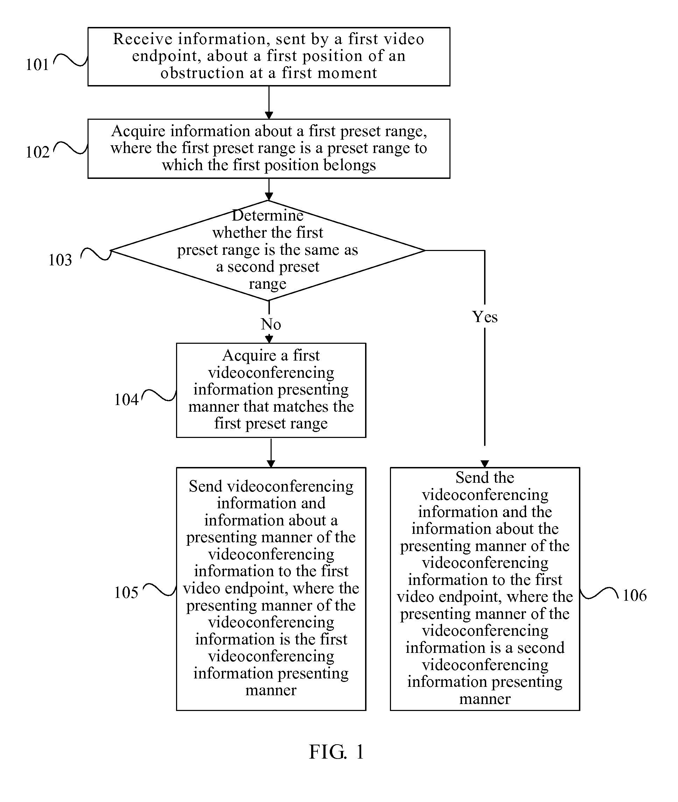

FIG. 1 is a flowchart of Embodiment 1 of a videoconferencing information presentation method according to the present invention. As shown in FIG. 1, the method in this embodiment may include the following content.
S101. Receive information, sent by a first video endpoint, about a first position of an obstruction at a first moment.

The first video endpoint is any video endpoint at a multipoint video conference, and the first position is a position in which the obstruction in a sensing area of the first video endpoint is located at the first moment.

Specifically, a video server receives the information, sent by the first video endpoint, about the first position of the obstruction at the first moment. The first video endpoint may collect, by using a position sensing device (such as a depth camera), real-time position information of the obstruction in the sensing area of the first video endpoint, and sends the real-time position information to the video server. The obstruction in the sensing area of the first video endpoint is an office device, a conference speaker, and the like.
S102. Acquire information about a first preset range, where the first preset range is a preset range to which the first position belongs.

The preset range is an area module formed by dividing the sensing area of the first video endpoint in advance.

Specifically, the video server may divide, according to a position relationship between a videoconferencing information display device of the first video endpoint and participants, the sensing area of the first video endpoint into several area modules. When the obstruction is in a different area module of the sensing area, a different videoconferencing information displaying solution is calculated and generated, which facilitates the participants' viewing.
S103. Determine whether the first preset range is the same as a second preset range.

The second preset range is a preset range to which a second position of the obstruction at a second moment belongs, where the second moment is a moment previous to the first moment.

Specifically, after receiving the information, sent by the first video endpoint, about the first position of the obstruction at the first moment and acquiring the preset range to which the first position belongs, the video server further determines whether a first position of the first video endpoint at the first moment and a second position of the first video endpoint at the second moment belong to a same preset range, where the second moment is a moment previous to the first moment. If the first position and the second position do not belong to a same preset range, S104 is performed; if the first position and the second position belong to a same preset range, S106 is performed.
S104. Acquire a first videoconferencing information presenting manner that matches the first preset range.

Specifically, when the first position of the first video endpoint at the first moment and the second position of the first video endpoint at the second moment belong to different preset ranges, a displaying manner of videoconferencing information at the first video endpoint needs to be updated. Therefore, the first videoconferencing information presenting manner that matches the first preset range needs to be acquired again.
S105. Send videoconferencing information and information about a presenting manner of the videoconferencing information to the first video endpoint, where the presenting manner of the videoconferencing information is the first videoconferencing information presenting manner.

Specifically, after determining that the first position of the first video endpoint at the first moment and the second position of the first video endpoint at the second moment belong to different preset ranges, and acquiring the first videoconferencing information presenting manner that matches the first preset range, the video server sends together, to the first video endpoint, videoconferencing information that contains shared sub stream of a video conference and information about a videoconferencing information presenting manner that matches the videoconferencing information, so that the first video endpoint can present the videoconferencing information in a manner that facilitates the participants' viewing.
S106. Send the videoconferencing information and the information about the presenting manner of the videoconferencing information to the first video endpoint, where the presenting manner of the videoconferencing information is a second videoconferencing information presenting manner.

The second videoconferencing information presenting manner is a videoconferencing information presenting manner that matches the second preset range.

Specifically, after determining that the first position of the first video endpoint at the first moment and the second position of the first video endpoint at the second moment belong to a same preset range, the video server learns that the presenting manner of the videoconferencing information at the first video endpoint does not need to be updated. Therefore, the video server sends, to the first video endpoint, videoconferencing information that contains shared sub stream of a video conference and information about a second videoconferencing information presenting manner that matches the videoconferencing information, so that the first video endpoint can present the videoconferencing information in a manner that facilitates the participants' viewing.

In this embodiment, a video server receives information, sent by a first video endpoint, about a first position of an obstruction at a first moment in a sensing area of the first video endpoint; acquires information about a first preset range to which the first position belongs; determines whether the first preset range is the same as a second preset range to which a second position of the obstruction at a second moment belongs, where the second moment is a moment previous to the first moment; and finally acquires a presenting manner of videoconferencing information and sends the videoconferencing information and information about the presenting manner of the videoconferencing information to the first video endpoint, so that after receiving the videoconferencing information and the presenting manner of the videoconferencing information that are sent by the video server, the first video endpoint can present the videoconferencing information in a manner that facilitates participants' viewing, thereby avoiding that the obstruction blocks the videoconferencing information, and improving communication efficiency among the participants at a video conference.

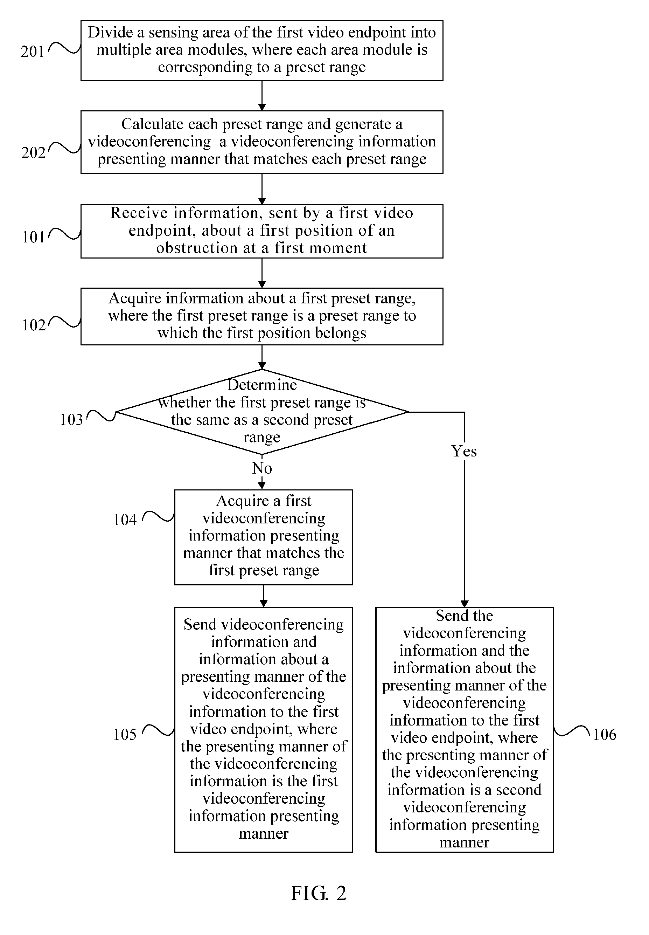

FIG. 2 is a flowchart of Embodiment 2 of a videoconferencing information presentation method according to the present invention. As shown in FIG. 2 and based on the method Embodiment 1 of the present invention shown in FIG. 1, before the receiving information, sent by a first video endpoint, about a first position of an obstruction at a first moment in S101, the method in this embodiment may further include the following content.
S201. Divide a sensing area of the first video endpoint into multiple area modules, where each area module corresponds to a preset range.

Specifically, a position, of the obstruction, in the sensing area of the first video endpoint is generally changeable. For example, the speaker generally walks around the sensing area in a presentation process, and a standing posture also changes. Therefore, different videoconferencing information presenting manners need to be provided according to a position range, of the obstruction, in the sensing area, so as to facilitate participants' viewing.
S202. Generate by means of calculation, for each preset range, a videoconferencing information presenting manner that matches each preset range.

Specifically, according to the position relationship between the videoconferencing information display device of the first video endpoint and the participants, and information such as a position and a size of the obstruction, a videoconferencing information displaying manner that matches a preset range to which the obstruction belongs may be generated by means of calculation, so that the participants can obtain a better viewing effect of videoconferencing information.

In this embodiment, a video server divides a sensing area of a first video endpoint into multiple area modules, so that each area module corresponds to a preset range; and generates by means of calculation, for each preset range, a videoconferencing information presenting manner that matches each preset range, thereby avoiding that the obstruction blocks videoconferencing information, enabling participants to obtain a better viewing effect of the videoconferencing information, and improving communication efficiency among the participants at a video conference.

In the foregoing method, the videoconferencing information presenting manner may include a size, a position, and transparency of a videoconferencing information display interface.

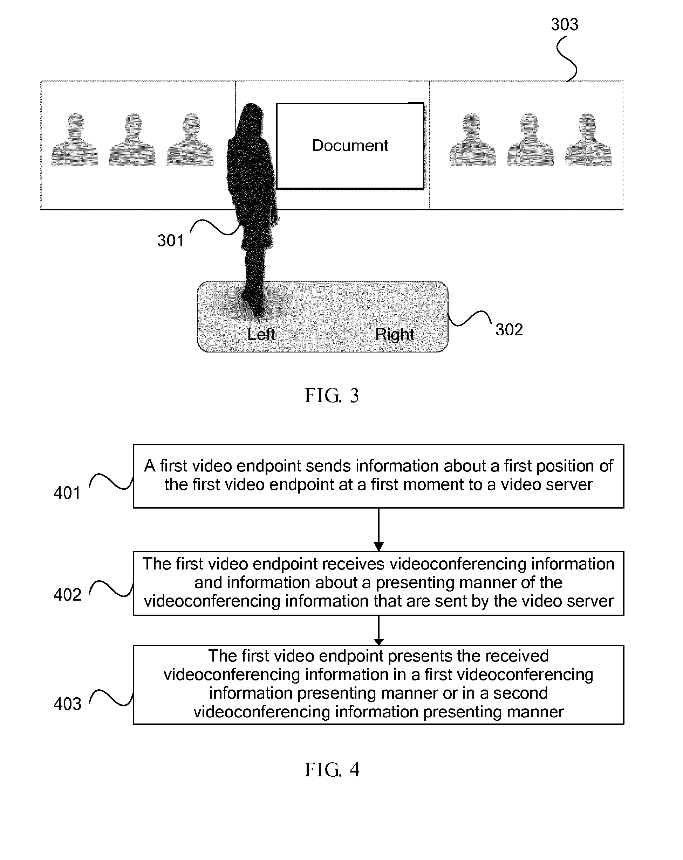

FIG. 3 is a schematic diagram of Embodiment 3 of a videoconferencing information presentation method according to the present invention. As shown in FIG. 3, at a video endpoint, a speaker 301 stands in a sensing area 302 of the video endpoint. Videoconferencing information includes profile pictures of participants and conference documents. The videoconferencing information is dynamically presented on a display device 303 of the video endpoint. When the speaker 301 stands on the left side of the sensing area 302 of the video endpoint, a displayed document moves rightwards. A size, a position, and transparency of a videoconferencing information display interface may be adjusted according to a position of an obstruction in the sensing area of the video endpoint, so that the participants can obtain a better viewing effect of the videoconferencing information, thereby improving communication efficiency among the participants at a video conference.

FIG. 4 is a flowchart of Embodiment 4 of a videoconferencing information presentation method according to the present invention. As shown in FIG. 4, the method in this embodiment may include the following content.
S401. A first video endpoint sends information about a first position of the first video endpoint at a first moment to a video server.

The first video endpoint is any video endpoint at a multipoint video conference, and the first position is a position in which an obstruction in a sensing area of the first video endpoint is located at the first moment.

Specifically, the first video endpoint may collect, by using a position sensing device (such as a depth camera), real-time position information of the obstruction in the sensing area of the first video endpoint and send the real-time position information to the video server, so that the video server can determine a presenting manner of videoconferencing information according to a position of the obstruction in the sensing area of the first video endpoint. The obstruction in the sensing area of the first video endpoint is an office device, a speaker, and the like.
S402. The first video endpoint receives videoconferencing information and information about a presenting manner of the videoconferencing information that are sent by the video server.

The presenting manner of the videoconferencing information is a first videoconferencing information presenting manner or a second videoconferencing information presenting manner, where the presenting manner of the videoconferencing information is determined by the video server according to the first position of the first video endpoint at the first moment.

Specifically, after receiving the information, sent by the first video endpoint, about the first position of the obstruction at the first moment, the video server further acquires information about a first preset range to which the first position belongs, and determines whether the first preset range is the same as a second preset range to which a second position of the obstruction at a second moment belongs, where the second moment is a moment previous to the first moment. When the first preset range is different from the second preset range, a displaying manner of the videoconferencing information at the first video endpoint needs to be updated, and the video server acquires again the first videoconferencing information presenting manner that matches the first preset range. When the first preset range is the same as the second preset range, a presenting manner of the videoconferencing information at the first video endpoint does not need to be updated. A videoconferencing information presenting manner that matches the first preset range is still the second videoconferencing information presenting manner. After acquiring the presenting manner of the videoconferencing information, the video server sends the videoconferencing information and information about the presenting manner of the videoconferencing information to the first video endpoint.
S403. The first video endpoint presents the received videoconferencing information in a first videoconferencing information presenting manner or in a second videoconferencing information presenting manner.

Specifically, after receiving the videoconferencing information and the information about the presenting manner of the videoconferencing information that are sent by the video server, the first video endpoint can present the videoconferencing information to participants.

In this embodiment, a first video endpoint sends, to a video server, information about a first position of an obstruction at a first moment in a sensing area of the first video endpoint, so that after receiving the information about the first position that is sent by the first video endpoint, the video server can acquire information about a first preset range to which the first position belongs; determines whether the first preset range is the same as a second preset range to which a second position of the obstruction at a second moment belongs, where the second moment is a moment previous to the first moment; and finally acquires a presenting manner of videoconferencing information, and sends the videoconferencing information and information about the presenting manner of the videoconferencing information to the first video endpoint. The first video endpoint presents the videoconferencing information, thereby presenting the videoconferencing information in a manner that facilitates participants' viewing; avoiding that the obstruction blocks the videoconferencing information; and improving communication efficiency among the participants at a video conference.

In the foregoing method, the presenting manner of the videoconferencing information may include a size, a position, and transparency of a videoconferencing information display interface.

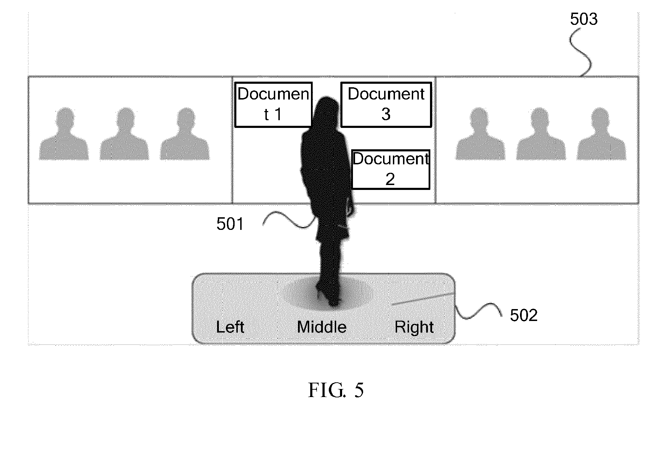

FIG. 5 is a schematic diagram of Embodiment 5 of a videoconferencing information presentation method according to the present invention. As shown in FIG. 5, at a video endpoint, a speaker 501 stands in a sensing area 502 of the video endpoint. Videoconferencing information includes profile pictures of participants and conference documents. The videoconferencing information is dynamically presented on a display device 503 of the video endpoint. When the speaker 501 stands in the middle of the sensing area 502 of the video endpoint, a displayed document moves to both sides and is presented in a distributed manner, which is separately document 1, document 2, and document 3. A size, a position, and transparency of a videoconferencing information display interface may be adjusted according to a position of an obstruction in the sensing area of the video endpoint, so that the participants can obtain a better viewing effect of the videoconferencing information, thereby improving communication efficiency among the participants at a video conference.

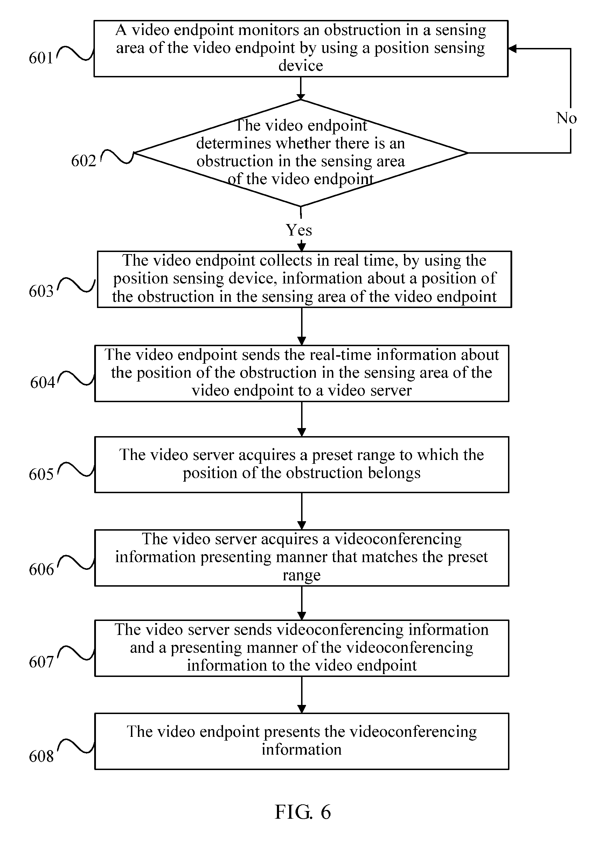

FIG. 6 is a flowchart of Embodiment 6 of a videoconferencing information presentation method according to the present invention. As shown in FIG. 6, the method in this embodiment may include the following content.
S601. A video endpoint monitors an obstruction in a sensing area of the video endpoint by using a position sensing device.

Specifically, one or more position sensing devices (such as a depth camera) are installed at each video endpoint, where the position sensing device is configured to detect the obstruction in the sensing area of the video endpoint.
S602. The video endpoint determines whether there is an obstruction in the sensing area of the video endpoint.

Specifically, the video endpoint determines, according to monitoring information of the position sensing device, whether there is an obstruction in the sensing area of the video endpoint. If there is no obstruction in the sensing area of the video endpoint, S601 is performed; if there is an obstruction in the sensing area of the video endpoint, S603 is performed.
S603. The video endpoint collects in real time, by using the position sensing device, information about a position of the obstruction in the sensing area of the video endpoint.
S604. The video endpoint sends the real-time information about the position of the obstruction in the sensing area of the video endpoint to a video server.
S605. The video server acquires a preset range to which the position of the obstruction belongs.

Specifically, the video server stores information about a preset range of the video endpoint at which the obstruction is located. Therefore, according to the information about the position of the obstruction, the preset range to which the position of the obstruction belongs is acquired by searching.
S606. The video server acquires a videoconferencing information presenting manner that matches the preset range.

Specifically, the video server may generate in advance a videoconferencing information presenting manner that matches each preset range of the video endpoint. After acquiring the preset range to which the position of the obstruction of the video endpoint belongs, the video server may directly acquire, by searching, the videoconferencing information presenting manner that matches the preset range.
S607. The video server sends videoconferencing information and information about a presenting manner of the videoconferencing information to the video endpoint.
S608. The video endpoint presents the videoconferencing information.

In this embodiment, a video endpoint first sends, to a video server, real-time position information of an obstruction in a sensing area of the video endpoint. After receiving information, sent by the video endpoint, about a position of the obstruction, the video server acquires, by acquiring information about a preset range to which the position of the obstruction belongs, a presenting manner of videoconferencing information that matches the position of the obstruction; and sends the videoconferencing information and the presenting manner of the videoconferencing information to the video endpoint. The video endpoint presents the videoconferencing information in the received presenting manner of the videoconferencing information, thereby avoiding that the obstruction blocks the videoconferencing information, and improving communication efficiency among participants at a video conference.

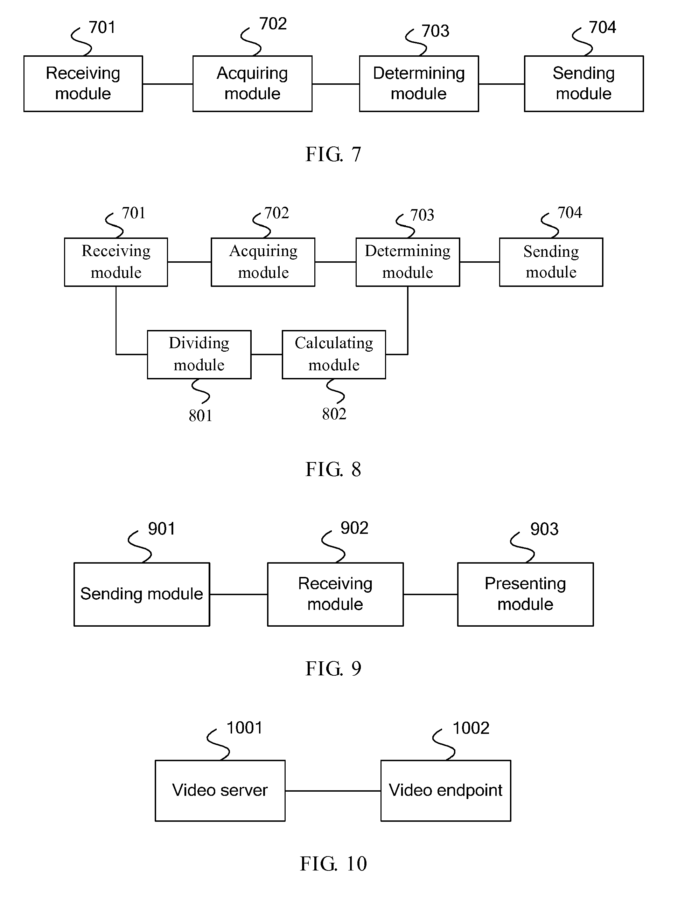

FIG. 7 is a flowchart of Embodiment 1 of a videoconferencing information presentation apparatus according to the present invention. As shown in FIG. 7, the videoconferencing information presentation apparatus in this embodiment may include a receiving module 701, an acquiring module 702, a determining module 703, and a sending module 704. The receiving module 701 is configured to receive information, sent by a first video endpoint, about a first position of an obstruction at a first moment, where the first video endpoint is any video endpoint at a multipoint video conference, and the first position is a position in which the obstruction in a sensing area of the first video endpoint is located at the first moment. The acquiring module 702 is configured to acquire information about a first preset range, where the first preset range is a preset range to which the first position belongs, and the preset range is an area module formed by dividing the sensing area of the first video endpoint in advance. The determining module 703 is configured to determine whether the first preset range is the same as a second preset range, where the second preset range is a preset range to which a second position of the obstruction at a second moment belongs, and the second moment is a moment previous to the first moment. The acquiring module 702 may further be configured to acquire a first videoconferencing information presenting manner that matches the first preset range. The sending module 704 is configured to send videoconferencing information and a presenting manner of the videoconferencing information to the first video endpoint, where the presenting manner of the videoconferencing information is the first videoconferencing information presenting manner. The sending module 704 may further be configured to send the videoconferencing information and the presenting manner of the videoconferencing information to the first video endpoint, where the presenting manner of the videoconferencing information is a second videoconferencing information presenting manner, and the second videoconferencing information presenting manner is a videoconferencing information presenting manner that matches the second preset range.

The videoconferencing information presentation apparatus in this embodiment may be used to execute the method in the method embodiment shown in FIG. 1, and has corresponding function modules. Implementation principles and technical effects of the apparatus are similar and are not described herein again.

FIG. 8 is a flowchart of Embodiment 2 of a videoconferencing information presentation apparatus according to the present invention. As shown in FIG. 8, the videoconferencing information presentation apparatus in this embodiment may further include a dividing module 801 and a calculating module 802. The dividing module 801 is configured to divide the sensing area of the first video endpoint into multiple area modules, where each area module corresponds to a preset range. The calculating module 802 is configured to generate by means of calculation, for each preset range, a videoconferencing information presenting manner that matches each preset range.

The videoconferencing information presentation apparatus in this embodiment may be used to execute the method in the method embodiment shown in FIG. 2, and has corresponding function modules. Implementation principles and technical effects of the apparatus are similar and are not described herein again.

According to the foregoing videoconferencing information presentation apparatus, the videoconferencing information presenting manner includes a size, a position, and transparency of a videoconferencing information display interface.

Implementation principles and technical effects of the videoconferencing information presentation apparatus in this embodiment are described in the foregoing and are not described herein again.

FIG. 9 is a flowchart of Embodiment 3 of a videoconferencing information presentation apparatus according to the present invention. As shown in FIG. 9, the videoconferencing information presentation apparatus in this embodiment may include a sending module 901, a receiving module 902, and a presenting module 903. The sending module 901 is configured to send information about a first position of a first video endpoint at a first moment to a video server, where the first video endpoint is any video endpoint at a multipoint video conference, and the first position is a position in which an obstruction in a sensing area of the first video endpoint is located at the first moment. The receiving module 902 is configured to receive videoconferencing information and a presenting manner of the videoconferencing information that are sent by the video server, where the presenting manner of the videoconferencing information is a first videoconferencing information presenting manner or a second videoconferencing information presenting manner, and the presenting manner of the videoconferencing information is determined by the video server according to the first position of the first video endpoint at the first moment. The presenting module 903 is configured to present the received videoconferencing information in the first videoconferencing information presenting manner or in the second videoconferencing information presenting manner.

The videoconferencing information presentation apparatus in this embodiment may be used to execute the method in the method embodiment shown in FIG. 4, and has corresponding function modules. Implementation principles and technical effects of the apparatus are similar and are not described herein again.

According to the foregoing videoconferencing information presentation apparatus, the presenting manner of the videoconferencing information includes a size, a position, and transparency of a videoconferencing information display interface.

Implementation principles and technical effects of the videoconferencing information presentation apparatus in this embodiment are described in the foregoing and are not described herein again.

FIG. 10 is a schematic structural diagram of a videoconferencing information presentation system according to an embodiment of the present invention. As shown in FIG. 10, the videoconferencing information presentation system in this embodiment may include a video server 1001 and a video endpoint 1001. For implementation principles and technical effects of the system, refer to the foregoing method embodiments, and details are not described herein again.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A videoconferencing information presentation method, comprising:
receiving information, sent by a first video endpoint, about a first position of an obstruction at a first moment, wherein the first video endpoint is any video endpoint at a multipoint video conference, and the first position is a position in which the obstruction in a sensing area of the first video endpoint is located at the first moment;
acquiring information about a first preset range, wherein the first preset range is a preset range to which the first position belongs, and the preset range is an area module formed by dividing the sensing area of the first video endpoint in advance;
determining whether the first preset range is the same as a second preset range, wherein the second preset range is a preset range to which a second position of the obstruction at a second moment belongs, and the second moment is a moment previous to the first moment;
if the first preset range is different from the second preset range, acquiring a first videoconferencing information presenting manner that matches the first preset range; and
sending videoconferencing information and a presenting manner of the videoconferencing information to the first video endpoint, wherein the presenting manner of the videoconferencing information is the first videoconferencing information presenting manner; and
if the first preset range is the same as the second preset range, sending the videoconferencing information and the presenting manner of the videoconferencing information to the first video endpoint, wherein the presenting manner of the videoconferencing information is a second videoconferencing information presenting manner, and the second videoconferencing information presenting manner is a videoconferencing information presenting manner that matches the second preset range.

2. The method according to claim 1, before the receiving information, sent by a first video endpoint, about a first position of an obstruction at a first moment, further comprising:
dividing the sensing area of the first video endpoint into multiple area modules, wherein each area module corresponds to a preset range; and
generating by means of calculation, for each preset range, a videoconferencing information presenting manner that matches each preset range.

3. The method according to claim 1 or 2, wherein the videoconferencing information presenting manner comprises:
a size, a position, and transparency of a videoconferencing information display interface.

4. A videoconferencing information presentation method, comprising:
sending, by a first video endpoint to a video server, information about a first position of the first video endpoint at a first moment, wherein the first video endpoint is any video endpoint at a multipoint video conference, and the first position is a position in which an obstruction in a sensing area of the first video endpoint is located at the first moment;
receiving, by the first video endpoint, videoconferencing information and a presenting manner of the videoconferencing information that are sent by the video server, wherein the presenting manner of the videoconferencing information is a first videoconferencing information presenting manner or a second videoconferencing information presenting manner, and the presenting manner of the videoconferencing information is determined by the video server according to the first position of the first video endpoint at the first moment; and
presenting, by the first video endpoint, the received videoconferencing information in the first videoconferencing information presenting manner or in the second videoconferencing information presenting manner.

5. The method according to claim 4, wherein the presenting manner of the videoconferencing information comprises:
a size, a position, and transparency of a videoconferencing information display interface.

6. A videoconferencing information presentation apparatus on a server side, comprising:
a receiving module, configured to receive information, sent by a first video endpoint, about a first position of an obstruction at a first moment, wherein the first video endpoint is any video endpoint at a multipoint video conference, and the first position is a position in which the obstruction in a sensing area of the first video endpoint is located at the first moment;
an acquiring module, configured to acquire information about a first preset range, wherein the first preset range is a preset range to which the first position belongs, and the preset range is an area module formed by dividing the sensing area of the first video endpoint in advance;
a determining module, configured to determine whether the first preset range is the same as a second preset range, wherein the second preset range is a preset range to which a second position of the obstruction at a second moment belongs, and the second moment is a moment previous to the first moment, wherein
the acquiring module is further configured to acquire a first videoconferencing information presenting manner that matches the first preset range; and
a sending module, configured to send videoconferencing information and a presenting manner of the videoconferencing information to the first video endpoint, wherein the presenting manner of the videoconferencing information is the first videoconferencing information presenting manner, wherein
the sending module is further configured to send the videoconferencing information and the presenting manner of the videoconferencing information to the first video endpoint, wherein the presenting manner of the videoconferencing information is a second videoconferencing information presenting manner, and the second videoconferencing information presenting manner is a videoconferencing information presenting manner that matches the second preset range.

7. The apparatus according to claim 6, further comprising:
a dividing module, configured to divide the sensing area of the first video endpoint into multiple area modules, wherein each area module corresponds to a preset range; and
a calculating module, configured to generate by means of calculation, for each preset range, a videoconferencing information presenting manner that matches each preset range.

8. The apparatus according to claim 6 or 7, wherein the videoconferencing information presenting manner comprises:
a size, a position, and transparency of a videoconferencing information display interface.

9. A videoconferencing information presentation apparatus on an endpoint side, comprising:
a sending module, configured to send information about a first position of a first video endpoint at a first moment to a video server, wherein the first video endpoint is any video endpoint at a multipoint video conference, and the first position is a position in which an obstruction in a sensing area of the first video endpoint is located at the first moment;
a receiving module, configured to receive videoconferencing information and a presenting manner of the videoconferencing information that are sent by the video server, wherein the presenting manner of the videoconferencing information is a first videoconferencing information presenting manner or a second videoconferencing information presenting manner, and the presenting manner of the videoconferencing information is determined by the video server according to the first position of the first video endpoint at the first moment; and
a presenting module, configured to present the received videoconferencing information in the first videoconferencing information presenting manner or in the second videoconferencing information presenting manner.

10. The apparatus according to claim 9, wherein the presenting manner of the videoconferencing information comprises:
a size, a position, and transparency of a videoconferencing information display interface.

11. A videoconferencing information presentation system, comprising:
a video server and a video endpoint, wherein
the video server uses the videoconferencing information presentation apparatus on a server side according to any one of claims 6 to 8, and the video endpoint uses the videoconferencing information presentation apparatus on an endpoint side according to claim 9 or 10.
